# FASCICULE DE BREVET EUROPEEN

(11) **EP 0 643 262 B1**
(45) Date de publication et mention de la délivrance du brevet: **17.07.1996**
(21) Numéro de dépôt: 94401973.6
(22) Date de dépôt: 06.09.1994
(51) Int. Cl.: F23D 14/22, F23D 14/32, C03B 5/235

(54) **Procédé de combustion**
Verbrennungsverfahren
Method for combustion

(30) Priorité: 09.09.1993 FR 9310703
(43) Date de publication de la demande: 15.03.1995
(73) Titulaire: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Karinthi, Pierre, F-78350 Jouy en Josas (FR); Buffenoir, Marc, F-78960 Voisins le Bretonneux (FR); Belot, Dominique, c/o Teisan K.K., Nihon Gas, Minato-ku, Tokyo 105 (JP)
(74) Mandataire: Le Moenner, Gabriel

(56) Documents cités:
- EP-A- 0 340 423
- EP-A- 0 521 522
- EP-A- 0 529 667
- DD-A- 70 049
- FR-A- 2 462 657

## Description

La présente invention concerne les procédés de combustion du type comprenant les étapes d'éjecter, via un brûleur, au moins un flux de gaz combustible et au moins un flux de gaz comburant oxygéné.

La plupart des procédés de combustion sont confrontés à des problèmes de production non désirée de NOx, l'azote provenant de l'air dans les procédés de combustion à l'air, ou d'entrées d'air parasites ou des combustibles et comburants eux-mêmes dans le cas de combustions à l'oxygène. De nombreuses techniques ont été proposées pour réduire la production de NOx, notamment pour diminuer la température maximum de la flamme ou pour allonger la flamme. On citera ainsi les techniques de recyclage des fumées au brûleur, d'étagement de la combustion ou de pulsation des fluides de combustion. Ces différentes techniques conviennent dans certaines applications particulières mais ne sont pas satisfaisantes dans la plupart des applications, notamment pour des installations de petite puissance.

La présente invention a pour objet de proposer un procédé de combustion permettant, de façon souple et aisément modulable, pour une large gamme de gaz de combustion, d'obtenir un allongement de la flamme et donc un abaissement de la température maximum pour réduire ainsi de façon significative la quantité de NOx formée.

Pour ce faire, selon une caractéristique de l'invention, le procédé comporte l'étape d'éjecter au moins une partie d'un desdits flux de gaz sous forme liquide, en particulier d'un jet de liquide.

Selon d'autres caractéristiques de l'invention :
- dans un procédé de combustion où le gaz comburant est l'air, le gaz injecté sous formes liquide et gazeuse est du gaz contenant du méthane, typiquement du gaz naturel ;
- dans les procédés de combustion à l'oxygène, le gaz injecté sous forme liquide est l'oxygène.

Le document DD-A-70.049 (Boschnakow), de 1968, décrit un procédé d'oxycoupage de pièces métalliques où, pour obtenir une largeur de coupe réduite et une profondeur de coupe accrue, on éjecte un flux d'oxygène de coupe liquide sous pression.

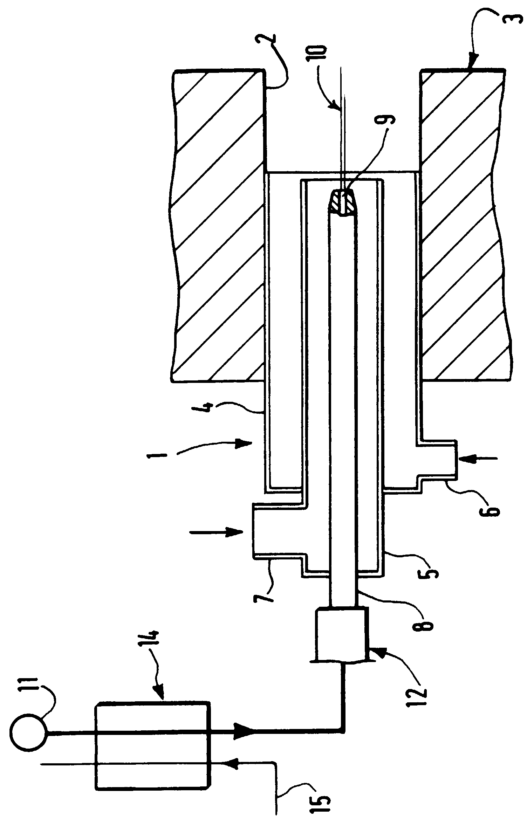

D'autres caractéristiques et avantages de la présente invention ressortiront de la description suivante de modes de réalisation faite en relation avec le dessin annexé, sur lequel :
la figure unique représente schématiquement un équipement de brûleur pour la mise en oeuvre d'un procédé selon l'invention.

Sur cette figure, on reconnaît une structure de brûleur, désignée généralement par la référence 1, disposée dans une ouverture traversante 2 d'une paroi 3 d'un four ou dans une enceinte thermique. Dans le mode de réalisation représenté, le brûleur comprend un tube externe 4 et un tube internes concentriques 5 munis chacun d'au moins un conduit 6, 7, respectivement, d'amenée d'un gaz de combustion éjecté via l'ouverture 2 dans l'enceinte thermique 3. Dans le tube central 5 s'étend, par exemple coaxialement centralement, au moins une canne d'injection 8 se terminant par une tête d'éjection à orifice calibré 9 pour éjecter dans l'enceinte 3 au moins un jet cohérent et à grande vitesse de gaz liquéfié 10 provenant d'une source 11 dudit gaz sous forme gazeuse ou sous forme liquide, la canne 8 étant alimentée par une conduite 12 isolée thermiquement, sous vide et/ou avec circulation d'un fluide cryogène de refroidissement.

La Demanderesse a démontré que, avec un tel type de brûleur, le jet cohérent de gaz liquéfié 10 pouvait traverser sur une assez grande longueur une zone à haute température, notamment la zone de flamme générée par l'éjection des gaz par les tubes 4 et 5. Le gaz de combustion ainsi propulsé sous forme liquide peut donc réagir avec les gaz éjectés à plus grande distance de la sortie du brûleur que ces derniers. On obtient ainsi un allongement modulable de la flamme aisément adaptable, en fonction de la proportion de gaz liquéfié éjecté, de sa pression d'éjection et de la configuration de l'injecteur, à la géométrie de l'enceinte à chauffer et à la configuration de flamme que l'on désire.

Dans un premier exemple de réalisation, on citera un four rotatif de fusion de fonte d'acier équipé, en bout, d'un brûleur alimenté en gaz naturel et en oxygène pur. Un tel four d'une charge de 8 tonnes de fonte est chauffé à l'aide du brûleur qui débite 250 m³/h de gaz naturel et 500 m³/h d'oxygène pur. La longueur axiale du four est d'environ 4,7 m. Dans les conditions habituelles de marche, la longueur de la flamme est de 1,5 m, sa température maximum est d'environ 2900°C et la teneur en NOx des fumées atteint 4000 ppm (parties par million). Selon l'invention, on injecte, via la canne d'injection 8, environ 30 % de l'oxygène nécessaire (c'est-à-dire 150 m³/h) sous forme liquide, le solde d'oxygène, 350 m³/h, étant injecté de façon classique, sous forme gazeuse.

Avec une pression de l'oxygène dans la canne d'injection 8 de 12 x 10⁵ Pa, et un orifice calibré 9 de 1,2 mm, le jet d'oxygène liquide formé a une vitesse de sortie de 46 mètres/seconde (m/s) (pour un débit de 150 m³/h). Ce jet d'oxygène liquide traverse la zone primaire de flamme et n'est complètement vaporisé qu'à environ 2,5 m du nez du brûleur. Le débit de 350 m³/h d'oxygène injecté à l'état gazeux est insuffisant pour brûler les 250 m³/h de gaz naturel. Le complément est brûlé par l'oxygène liquide vaporisé plus loin en aval, la flamme prenant ainsi une longueur de 4 m. Cette combustion de type étagé abaisse la température maximum de la flamme de 200°C environ, ce qui a deux effets favorables :
a) la teneur en NOx des fumées est ramenée à environ 1000 ppm;
b) en fin de fusion, le rendement thermique est amélioré car tout le monoxyde de carbone provenant du carbone de la charge de fonte (qui se forme pendant cette période) est brûlé en dioxyde de carbone sans que l'on oxyde du fer (ce qui se produit habituellement si l'on tente de suroxygéner une flamme obtenue selon les procédés conventionnels).

Dans cet exemple de réalisation, l'oxygène fourni au tube 4 et à la canne 8 provient avantageusement d'une même source d'oxygène sous pression, typiquement de 12 x 10⁵ Pa, délivré par un évaporateur, la partie d'oxygène adressée à la canne 8 traversant, à la sortie de l'évaporateur, un refroidisseur 14 refroidi par un fluide cryogénique 15, par exemple de l'azote.

Cet exemple de réalisation, avec injection d'une partie (entre 15 et 35 %) de l'oxygène total sous forme liquide, soit avec un rapport entre les débits massiques d'oxygène liquide et d'oxygène gazeux compris entre 18 et 55 %, convient à la plupart des fours de fusion de métaux, aux fours à émaux ou aux fours de verre.

Un autre exemple de réalisation concerne une chaudière à tube de fumée de 2 MW (ou 3 T/h) de vapeur alimentée par 200 m³/h de gaz naturel (assimilé au méthane CH₄) et 2000 m³/h d'air. Le gaz naturel à une pression de 5 x 10⁵ Pa est adressé au tube 5 et à la canne 8, le circuit d'alimentation de cette dernière traversant un échangeur 14 refroidi par de l'azote liquide pour liquéfier le gaz naturel. Le diamètre de l'orifice calibré 9 est de 0,7 mm. Le débit de gaz naturel liquide par cet orifice est d'environ 40 m³/h, soit 20 % du débit total, les 80 % restants, soit 160 m³/h étant injectés sous forme gazeuse par le tube 5. Le gaz naturel liquéfié sort de l'orifice 9 à une vitesse de 49 m/s.

La longueur du premier tube de fumées de la chaudière dans lequel se déploie la flamme est d'environ 5 m. Selon les conditions conventionnelles de fonctionnement, la flamme occupe 3,5 m dans ce tube et sa température maximum atteint 1620°C, ce qui conduit à la formation d'environ 250 mg de NOx par m³ de fumées (envrion 200 ppm). Selon la présente invention, avec une injection de 20 % du gaz naturel sous forme liquide, la flamme s'étale sur les 5 mètres du tube de fumées primaire, sa température maximum n'est plus que de 1570°C et la teneur en NOx des fumées n'est plus que de 90 mg/m³. Il est à noter que les normes actuelles européennes de rejet pour les chaudières passeront prochainement à 200 mg/m³ et qu'elles sont déjà de 100 mg/m³ aux Pays-Bas. Ces performances peuvent être obtenues sur des chaudières à tube d'eau d'une puissance supérieure à 20 MW, mais sont encore inaccessibles (à un coût raisonnable) pour les chaudières de puissance moyenne à tube de fumées.

Cet exemple de réalisation avec injection sous forme liquide d'une partie (entre 10 et 30 %) du gaz naturel fourni au brûleur, soit un rapport entre les débits massiques de gaz naturel liquéfié et de gaz naturel gazeux compris entre 10 % et 45 %, typiquement de l'ordre de 25 %, convient à la plupart des chaudières à tubes de fumées d'une puissance inférieure à 20 MW.

En variante, le brûleur peut être alimenté directement en gaz naturel liquéfié, auquel cas le refroidisseur 14 est supprimé et le tube 5 est remplacé par un tube atomiseur pulvérisant le gaz naturel liquéfié en fines gouttelettes autour du jet central de gaz liquéfié 10.

Le nombre de jets de gaz de combustion liquéfié peut être multiplié et la répartition géométrique de ces jets par rapport aux flux de gaz de combustion éjectés adaptée selon les besoins.

## Revendications

1. Procédé de combustion comprenant les étapes d'éjecter, via un brûleur (1), au moins un flux de gaz combustible et au moins un flux de gaz comburant oxygéné, caractérisé en ce qu'il comprend l'étape d'éjecter au moins une partie d'un desdits flux de gaz sous forme liquide (10).

2. Procédé selon la revendication 1, caractérisé en ce que le gaz comburant est l'air, le gaz éjecté sous formes liquide et gazeuse étant du gaz contenant du méthane.

3. Procédé selon la revendication 2, caractérisé en ce que le rapport entre les débits massiques des flux de gaz injectés sous forme liquide et gazeuse est compris entre 10 et 45 %.

4. Procédé selon la revendication 1, caractérisé en ce que le gaz comburant est de l'oxygène qui est éjecté sous formes liquide et gazeuse.

5. Procédé selon la revendication 4, caractérisé en ce que le gaz combustible est du gaz contenant du méthane.

6. Procédé selon la revendication 4 ou la revendication 5, caractérisé en ce que le rapport entre les débits massiques des flux de gaz injectés sous formes liquide et gazeuse est compris entre 18 et 55 %.

7. Procédé selon l'une des revendications précédentes, caractérisé en ce qu'au moins une partie du flux de gaz liquéfié est injectée centralement (10) en bout du brûleur (1).

8. Procédé selon l'une des revendications 1 à 3, caractérisé en ce que le brûleur (1) équipe une chaudière.

9. Procédé selon l'une des revendications 1 et 4 à 6, caractérisé en ce que le brûleur (1) équipe un four de fusion de métaux.

10. Procédé selon l'une des revendications 1 et 4 à 6, caractérisé en ce que le brûleur (1) équipe un four de verre.

## Patentansprüche

1. Verbrennungsverfahren, umfassend die Schritte des Ausstoßens zumindest eines leicht entzündlichen Gasstroms und zumindest eines sauerstoffhaltigen, die Verbrennung bewirkenden Gasstroms über einen Brenner (1), gekennzeichnet durch den Schritt des Ausstoßens zumindest eines Teils dieser Gasströme in flüssiger Form (10).

2. Verfahren nach Anspruch 1, dadurch gekennzeichnet, daß das die Verbrennung bewirkende Gas Luft und das in flüssiger und gasförmiger Form ausgestoßene Gas ein methanhaltiges Gas ist.

3. Verfahren nach Anspruch 2, dadurch gekennzeichnet, daß das Verhältnis zwischen den Massenströmen der in flüssiger und gasförmiger Form eingeleiteten Gasströme zwischen 10 und 45 % liegt.

4. Verfahren nach Anspruch 1, dadurch gekennzeichnet, daß das die Verbrennung bewirkende Gas Sauerstoff ist, der in flüssiger und gasförmiger Form ausgestoßen wird.

5. Verfahren nach Anspruch 4, dadurch gekennzeichnet, daß das leicht entzündliche Gas methanhaltiges Gas ist.

6. Verfahren nach Anspruch 4 oder 5, dadurch gekennzeichnet, daß das Verhältnis zwischen dem Massenströmen der in flüssiger und gasförmiger Form eingeleiteten Gasströme zwischen 18 und 55 % liegt.

7. Verfahren nach einem der vorangehenden Ansprüche, dadurch gekennzeichnet, daß zumindest ein Teil des verflüssigten Gasstroms zentral (10) am Kopfende des Brenners (1) eingeleitet wird.

8. Verfahren nach einem der Ansprüche 1 bis 3, dadurch gekennzeichnet, daß der Brenner (1) Teil eines Kessels ist.

9. Verfahren nach einem der Ansprüche 1 oder 4 bis 6, dadurch gekennzeichnet, daß der Brenner (1) Teil eines Metallschmelzofens ist.

10. Verfahren nach einem der Ansprüche 1 oder 4 bis 6, dadurch gekennzeichnet, daß der Brenner (1) Teil eines Glasofens ist.

## Claims

1. Combustion process comprising stages of ejecting, via a burner (1), at least one flow of combustible gas and at least one flow of oxygenated combustion assisting gas, characterized in that it comprises a stage of ejecting at least part of one of the said gas flows in liquid form (10).

2. Process according to claim 1, characterized in that the combustion assisting gas is air, the gas ejected in liquid and gaseous forms being a gas containing methane.

3. Process according to claim 2, characterized in that the ratio between the mass throughput rates of the gas flows injected in liquid and gaseous form is between 10 and 45 %.

4. Process according to claim 1, characterized in that the combustion assisting gas is oxygen which is ejected in liquid and gaseous forms.

5. Process according to claim 4, characterized in that the combustible gas is a gas containing methane.

6. Process according to claim 4 or claim 5, characterized in that the ratio between the mass throughput rates of the gas flows injected in liquid and gaseous forms is between 18 and 55 %.

7. Process according to one of the preceding claims, characterized in that at least part of the liquefied gas flow is injected centrally (10) into the end of the burner (1).

8. Process according to one of claims 1 to 3, characterized in that the burner (1) is fitted to a boiler.

9. Process according to one of claims 1 and 4 to 6, characterized in that the burner (1) is fitted to a metal melting furnace.

10. Process according to one of claims 1 and 4 to 6, characterized in that the burner (1) is fitted to a glass furnace.
